# EUROPEAN PATENT SPECIFICATION

(11) **EP 2 255 565 B1**
(45) Date of publication and mention of the grant of the patent: **06.05.2015**
(21) Application number: 08724267.3
(22) Date of filing: 20.03.2008
(51) Int. Cl.: H04W 36/00

(54) **METHODS FOR PROVISION OF SYSTEM INFORMATION, COMPUTER PROGRAMS, NETWORK NODE, TERMINAL, AND RADIO ACCESS NETWORK**
VERFAHREN ZUR BEREITSTELLUNG VON SYSTEMINFORMATIONEN, COMPUTERPROGRAMME, NETZKNOTEN, ENDGERÄT UND FUNKZUGANGSNETZ
PROCÉDÉS DE FOURNITURE D'INFORMATION SYSTÈME, PROGRAMMES D'ORDINATEUR, NOEUD DE RÉSEAU, TERMINAL ET RÉSEAU D'ACCÈS RADIO

(43) Date of publication of application: 01.12.2010
(73) Proprietor: Telefonaktiebolaget L M Ericsson (PUBL), 164 83 Stockholm (SE)
(72) Inventor: LINDOFF, Bengt, S-237 36 Bjärred (SE); MÜLLER, Walter, S-194 62 Upplands Väsby (SE)
(74) Representative: Kühn, Friedrich Heinrich
(86) International application number: PCT/SE2008/050320
(87) International publication number: WO 2009/116907

(56) References cited:
- EP-A1- 1 467 582
- WO-A1-01/52585
- WO-A1-02/067458
- WO-A1-2008/040448
- US-A1- 2003 031 143
- US-A1- 2006 223 557
- MOTOROLA: "Measurement Gap Control for E-UTRAN to GERAN Handover", 3GPP DRAFT; GR-070006 MEASUREMENT GAP CONTROL FOR E-UTRAN TO GERAN HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Sophia Antipolis, France; 20070927, 25 September 2007 (2007-09-25), XP050440884, [retrieved on 2007-09-25]

## Description

### Technical field

The present invention relates to a method for providing system information from a network of a cellular telecommunication system to a terminal of the telecommunication system, a method for a terminal of a cellular telecommunication system for provision of system information from a network of the telecommunication system, computer programs for implementing the methods, a network node, a terminal, and a radio access network.

### Background

A cellular network is a radio network made up of a number of radio cells (or just cells) each served by a fixed transmitter, known as a cell site or base station. These cells are used to cover different areas in order to provide radio coverage over a wider area than the area of one cell. Cellular networks are inherently asymmetric with a set of fixed main transceivers each serving a cell and a set of distributed (generally, but not always, mobile) terminals with transceivers which provide services to the network's users. A terminal can have ability to work in more than one network. Mobility is a desirable feature in cellular telecommunication systems. That means that a terminal should be connected to the best available cellular system having coverage at the specific position where the terminal is located. In order to have good working handover functionality, the terminal needs to find new cells, i.e. perform cell search, and measure e.g. signal strength on detected cells, both of the current cellular system and other cellular systems. When cell search is to be performed on other frequencies than the one current data reception is performed on, the network typically need to create coordinated transmission gaps for the terminal to enable the terminal to do its measurements, since the terminal due to complexity issues normally only is able to receive information from one carrier frequency at the time. With more types of systems working together as described above, and increasing complexity on needed information, e.g. for performing handover between these systems, there is a need for an approach for handling provision or acquisition of system information.

Document GR-070006, 3GPP RAN-GERAN workshop on GERAN/LTE, Sophia-Antipolis, 27th-28th September 2007, "Measurement Gap Control for E-UTRAN to GERAN Handover", relates to configuration and scheduling of measurement gap to support handover from E-UTRAN to GERAN, achieved by the UE reporting time difference between E-UTRAN and GERAN cells.

### Summary

The invention is defined according to method claims 1 and 10, apparatus claim 17 a network node for a radio network, and apparatus claim 18 a terminal of a cellular telecommunication system.

It is therefore an object of the present invention to provide an approach for improving provision or acquisition of system information. The present invention is based on the understanding that some useful system information, e.g. for handover, is broadcasted periodically, while the provided transmission gaps may not fit in time with these periodically broadcasted information blocks, whereby the terminal may miss the useful information. The inventors have realised that by providing a few selectable actions regarding the transmission gap, performed based on fairly basic data, can provide a robust approach for better provision of the useful information to the terminals.

According to a first example, there is provided a method for providing system information from a network node of a cellular telecommunication system to a terminal of the telecommunication system, where the telecommunication system employs periodical transmission gaps for enabling determination of information by the terminal from broadcasted system information from at least one neighbouring cell(s). The method comprises receiving, from the terminal, information on successfulness of acquisition of the broadcasted system information. If the information on successfulness indicates unsuccessful acquisition, the method proceeds by changing the transmission gap configuration, and by transmitting instructions to the terminal on the change of transmission gap configuration.

The method may further comprise adjusting timing of the transmission gap, if timing properties between the transmission gap and the broadcasted system information indicates that the transmission gap fails to embrace the timing of the broadcasted system information; and changing transmission gap pattern, if timing properties between the transmission gap and the broadcasted system information indicates that the transmission gap embrace the timing of the broadcasted system information but the indicator whether the broadcasted system information was decoded by the terminal indicates that decoding failed.

Transmitting instructions to the terminal on the change of transmission gap configuration may further comprise transmitting the instructions to another terminal in vicinity of the terminal such that the another terminal is enabled to acquire desired system information. Here, the term "in vicinity" should be construed to mean that the one terminal in vicinity of another is experiencing essentially similar signal conditions with relation to the cell structure.

The method may further comprise transmitting a request for information on successfulness of acquisition of the broadcasted system information to the terminal.

According to a second example, there is provided a method for a terminal of a cellular telecommunication system for provision of system information from a network of the telecommunication system. The telecommunication system employs periodical transmission gap for enabling determination of information by the terminal from broadcasted system information from at least one neighbouring cell(s). The method comprises transmitting, to the network, information on successfulness of acquisition of the broadcasted system information; receiving instructions from the network on a change of transmission gap configuration if the information on successfulness indicates unsuccessful acquisition; and changing the transmission gap configuration according to the instructions.

The method may further comprise determining timing properties between the transmission gap and the broadcasted system information, wherein the information on successfulness comprises the determined timing properties.

The method may further comprise determining whether the broadcasted system information was decoded, wherein the information on successfulness comprises an indicator on whether the broadcasted system information was decoded by the terminal.

The method may further comprise receiving a request for information on successfulness of acquisition of the broadcasted system information from the network, wherein the transmitting to the network of information on successfulness of acquisition of the broadcasted system information is performed upon the request.

The transmitting to the network of information on successfulness of acquisition of the broadcasted system information may be performed periodically.

According to a third example, there is provided a computer program comprising computer executable instructions causing a processor, when executed thereon, to perform the steps according to any of the embodiments of the first aspect of the invention.

According to a fourth example, there is provided a computer program comprising computer executable instructions causing a processor, when executed thereon, to perform the steps according to any of the embodiments of the second aspect of the invention.

According to a fifth example, there is provided a network node for a radio network comprising a plurality of cells of a telecommunication system employing periodical transmission gaps for enabling determination by a terminal of the telecommunication system of information from broadcasted system information from at least one neighbouring cell(s). The network node comprises a transceiver arranged to receive information on successfulness of acquisition of the broadcasted system information from the terminal, and a controller being arranged to change the transmission gap configuration if the information on successfulness indicates unsuccessful acquisition. The transceiver is arranged to transmit instructions to the terminal on the change of transmission gap configuration.

The controller may be arranged to adjust timing of the transmission gap, if timing properties between the transmission gap and the broadcasted system information indicates that the transmission gap fails to embrace the timing of the broadcasted system information; and change transmission gap pattern, if timing properties between the transmission gap and the broadcasted system information indicates that the transmission gap embrace the timing of the broadcasted system information but the indicator whether the broadcasted system information was decoded by the terminal indicates that decoding failed.

The transmission of instructions to the terminal on the change of transmission gap configuration may further comprise a transmission of the instructions to another terminal in vicinity of the terminal such that the another terminal is enabled to acquire desired system information.

The network node may further be arranged to transmit a request for information on successfulness of acquisition of the broadcasted system information to the terminal.

According to a sixth example, there is provided a terminal of a cellular telecommunication system employing periodical transmission gap for enabling determination of information from broadcasted system information from at least one neighbouring cell(s). The terminal comprises a transceiver being arranged to transmit, to a network of the telecommunication system, information on successfulness of acquisition of the broadcasted system information, and arranged to receive instructions from the network on a change of transmission gap configuration. The terminal, in response to the received instructions, which are based on the information if the information on successfulness indicates unsuccessful acquisition, changes the employed transmission gap configuration.

The terminal may further be arranged to determine timing properties between the transmission gap and the broadcasted system information, wherein the information on successfulness comprises the determined timing properties.

The terminal may further be arranged to determine whether the broadcasted system information was decoded, wherein the information on successfulness comprises an indicator on whether the broadcasted system information was decoded by the terminal.

The terminal may further be arranged to receive a request for information on successfulness of acquisition of the broadcasted system information from the network, wherein the transmission to the network of information on successfulness of acquisition of the broadcasted system information is performed upon the request.

The transmission to the network of information on successfulness of acquisition of the broadcasted system information may be performed periodically.

According to a seventh example, there is provided a radio access network employing periodical transmission gaps for enabling determination by a terminal according to the sixth example of information from broadcasted system information comprising a plurality of network nodes according to the fifth example.

The information on successfulness may comprise timing properties between the transmission gap and the broadcasted system information, and/or an indicator whether the broadcasted system information was decoded by the terminal.

The change of the transmission gap configuration may comprise adjustment of timing of the transmission gap and/or a change of transmission gap pattern. The change of transmission gap pattern may comprise a change of duration of the transmission gap and/or a change of periodicity of transmission gaps.

The broadcasted system information may comprise any of a Master Information Block or a global cell identifier.

### Brief description of drawings

Fig. 1 schematically illustrates a cellular network and a terminal operating in the cellular network.
Figs. 2a to 2e illustrates relations between broadcasted system information and transmission gaps.
Fig. 3 illustrates an example on broadcasted system information provided in a telecommunication system.
Fig. 4 is a flow chart illustrating a method for a network according to an embodiment.
Fig. 5 is a flow chart illustrating a method for a network according to another embodiment.
Fig. 6 is a flow chart illustrating a method for a terminal according to an embodiment.
Fig. 7 schematically illustrates a computer program.

### Detailed description

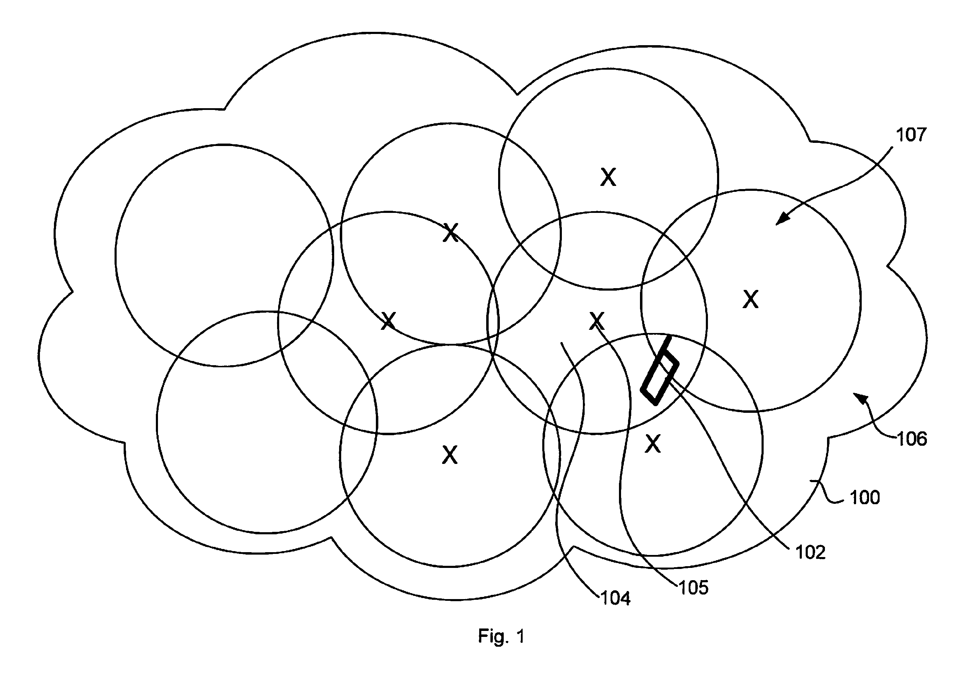

Fig. 1 schematically illustrates a cellular radio access network 100 and a terminal 102 operating in the cellular radio access network 100. The terminal is camping on a first cell 104 operated by a network node 105 and periodically, during transmission gaps, making measurements to determine information on possible neighbouring cells 106 operated by network nodes 107, e.g. for a handover, for improving measurements, checking cell type, find scheduling information to ease acquisition of desired information, etc. These measurements are performed to find cells or systems that operate on other frequencies than the one data is received on from the first cell 104. Measurements on cells that operate on the same frequency as the first cell for determining desired information can be determined without aid of the transmission gaps. Thus, the aim is to handle cells operating on these other frequencies.

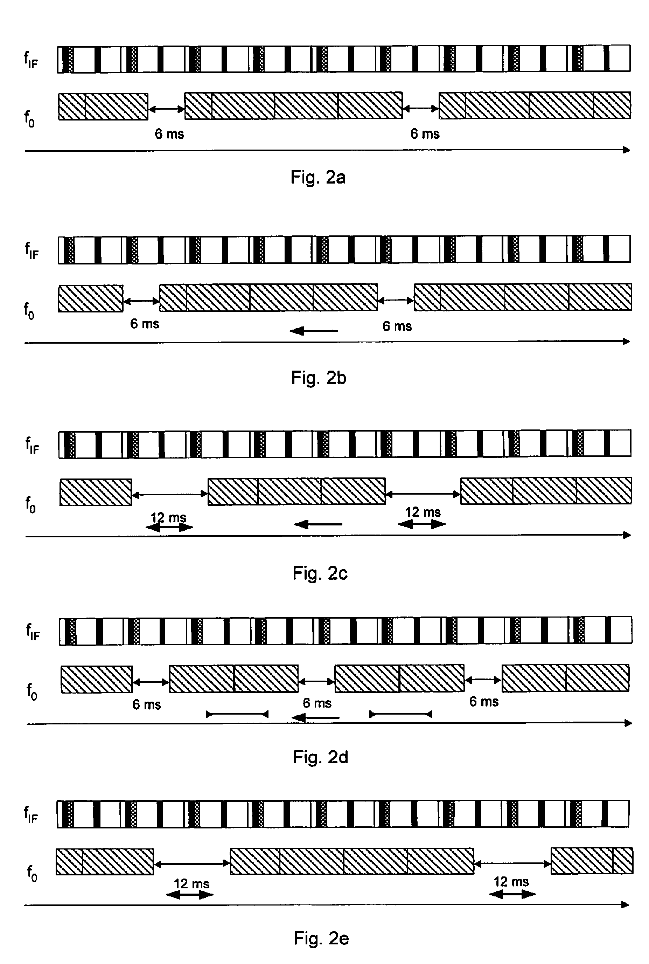

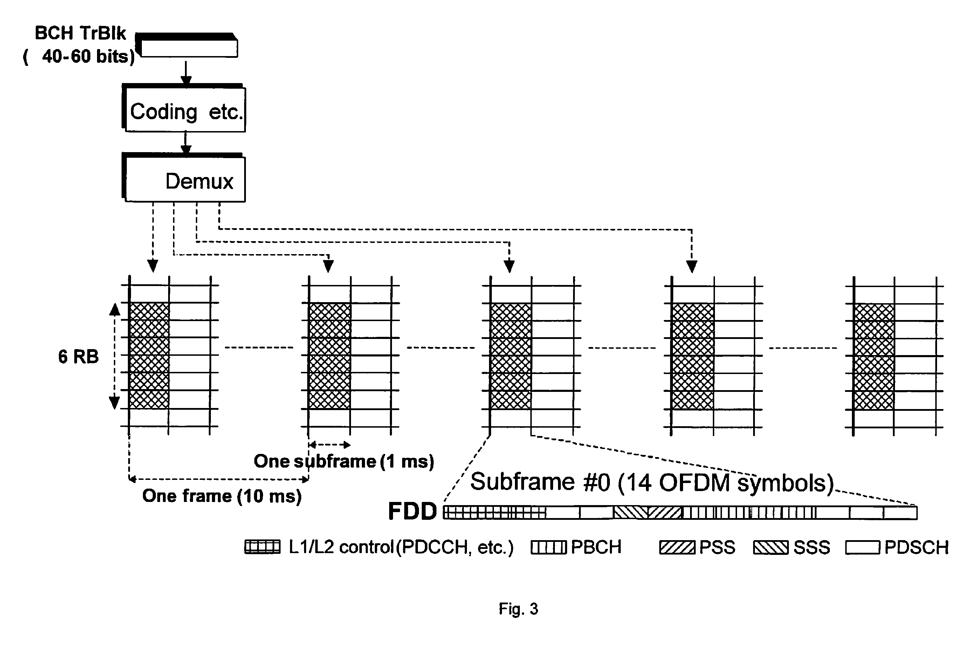

Figs. 2a to 2e illustrates relations between broadcasted system information and transmission gaps over time. In Fig. 2a, a random situation is illustrated, where the upper signal representation f1_{F} comprises the broadcasted system information from a neighbouring cell, and the lower signal representation f₀ indicates transmissions of the camping cell with its transmission gaps, here given the example duration 6 ms. Thus, the terminal is able to listen for useful system information during the gaps. In the illustrated example, the chequered broadcasted blocks of f_{1F} comprise desired information, which in the example is considered to be coded into four consecutive blocks broadcasted one every 10 ms, i.e. a periodicity of 40 ms, and coded such that during good signal conditions, only one of the blocks is needed to decode the information, while during worse signal conditions, two or more blocks may be needed to decode the information. An example on a system similar to this is 3G Long Term Evolution and its Primary Broadcasting Channel, which includes System Master Information Block (MIB) this way. This is illustrated in Fig. 3. The MIB carries mainly static information of the configuration of the cell, e.g. downlink bandwidth, number of transmit antennas of base station, control channel configuration, cell timing, system frame number, etc. Other information is broadcasted more frequently, as illustrated by black blocks, from which at least some information, or at least signal strength measurements, can be made. In the example of 3G Long Term Evolution, these can be synchronisation signals, such as Primary Synchronisation Signal (PSS) and Secondary Synchronisation Signal (SSS), which are transmitted every 5 ms. From PSS and SSS, the terminal can determine timing, which can be used for the successfulness information to be provided to the network. Thus, although the terminal was unable to read a MIB, which unability can be included in the successfulness information, the terminal was able to gain some knowledge from synchronisation information blocks, i.e. timing, which also can be included in the successfulness information to enable the network to make a decision on a proper change of configuration of the transmission gap, e.g. gap timing.

Returning to Fig. 2a, we can see that none of the desired blocks appear during the transmission gaps, and the terminal will not be able to read the desired information. The terminal can then provide information on successfulness of reading the desired information to the network, here that it was not successful, such that the network can take action by changing the transmission gap configuration, e.g. changing timing of the gap and/or changing the gap pattern, such as its duration and/or periodicity.

Fig. 2b illustrates that the network has changed the timing of the gaps, as indicated by arrow, and instructed the terminal accordingly. Now, one of the desired blocks can be read by the terminal in the gap, and if signal conditions are good, be able to decode the broadcasted information.

Fig. 2c illustrates that the network has changed the timing of the gaps, as indicated by arrow, and also extended duration of the gaps, as indicated by double arrows, and instructed the terminal accordingly. Now, two of the desired blocks can be read by the terminal in the gap, and although if signal conditions are not that good, be able to decode the broadcasted information.

Fig. 2d illustrates that the network has changed the timing of the gaps, as indicated by arrow, and also decreased the period between gaps, as indicated by double arrows, and instructed the terminal accordingly. Now, two out of four consecutive blocks of the desired blocks can be read by the terminal in the gap, and although if signal conditions are not that good, be able to decode the broadcasted information.

Fig. 2e illustrates that the network has extended duration of the gaps, as indicated by double arrows, and instructed the terminal accordingly. Now, one of the desired blocks can be read by the terminal in the gap, and if signal conditions are good, be able to decode the broadcasted information.

From the given examples with reference to Figs. 2b to 2e, it can be seen that fairly non-complex actions enables the terminal to read the desired broadcasted information. The possibilities for the network to take action by changing the transmission gap configuration, e.g. changing timing of the gap and/or changing the gap pattern, such as its duration and/or periodicity can be combined to give several other situations than those given by Figs. 2b to 2e.

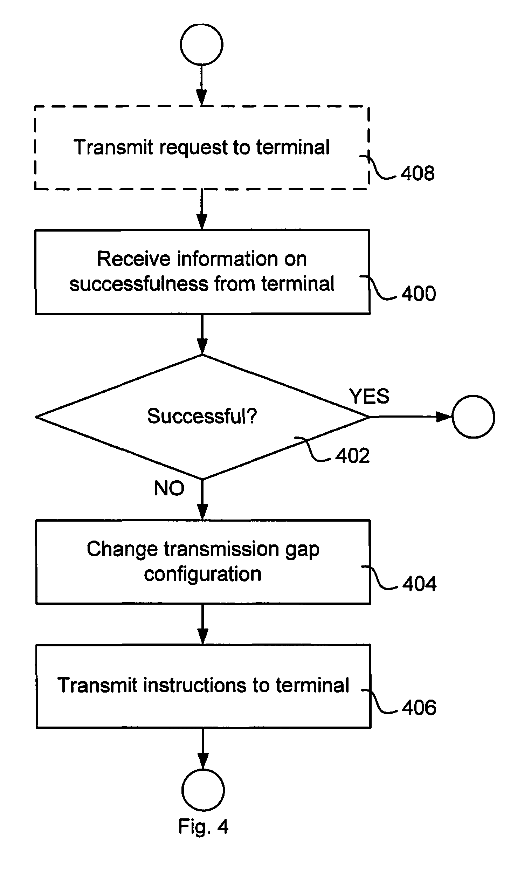

Fig. 4 is a flow chart illustrating a method for a network according to an embodiment. In an information reception step 400, the network receives information from the terminal on successfulness of acquisition of the broadcasted system information, e.g. whether the terminal was able to read a desired information block, and, optionally, whether the terminal was able to decode the information of the block. In a successfulness decision step 402, the network determines to proceed to a transmission gap configuration change step 404 if the acquisition was indicated to be unsuccessful, otherwise, the method proceeds to an idle state until it is to be repeated. In the transmission gap configuration change step 404, the network determines a change of transmission gap configuration, e.g. as any of the examples demonstrated with reference to Figs. 2b to 2e. The network then transmits instructions on the change of transmission gap to the terminal in an instruction transmission step 406. The method then enters the idle state. Optionally, before the information reception step 400, the network can transmit a request for information on successfulness to a terminal in a request transmission step 408 to initiate the terminal to respond with the information on successfulness of acquisition of the broadcasted system information. Alternatively, the terminal provides the information on a periodical basis, or on initiative of the terminal.

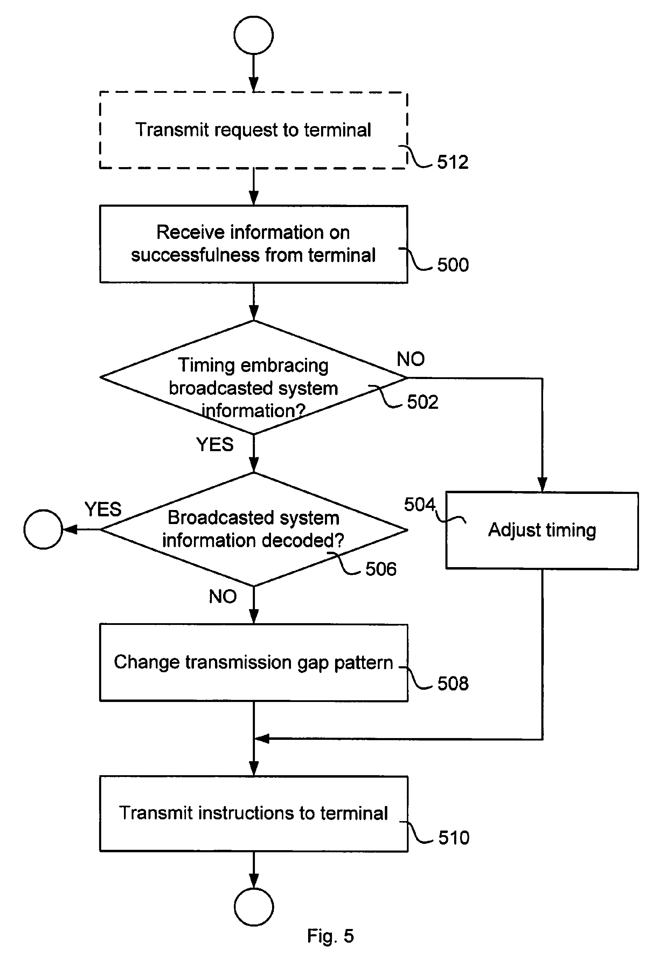

Fig. 5 is a flow chart illustrating a method for a network according to another embodiment. In an information reception step 500, the network receives information from the terminal on successfulness of acquisition of the broadcasted system information, i.e. whether the terminal was able to read a desired information block, and, whether the terminal was able to decode the information of the block. In a timing decision step 502, the network determines to proceed with a timing adjustment step 504 if the terminal indicated that it was not able to read the block. Timing is adjusted for example as demonstrated with reference to any of Figs. 2b to 2d. If the terminal indicated that it was able to read the block, the network determines to proceed to a decoding decision step 506, where the network determines if the desired broadcasted information was decoded, the method goes to an idle state, otherwise, the method proceeds to a transmission gap pattern change step 508. In the transmission gap pattern change step 508, the network determines a change of transmission gap pattern, e.g. changing periodicity and/or gap duration. The network then transmits instructions on the change of transmission gap with respect to any changes in gap pattern or gap timing to the terminal in an instruction transmission step 510. The method then enters the idle state. Optionally, before the information reception step 500, the network can transmit a request for information on successfulness to a terminal in a request transmission step 512 to initiate the terminal to respond with the information on successfulness of acquisition of the broadcasted system information. Alternatively, the terminal provides the information on a periodical basis, or on initiative of the terminal.

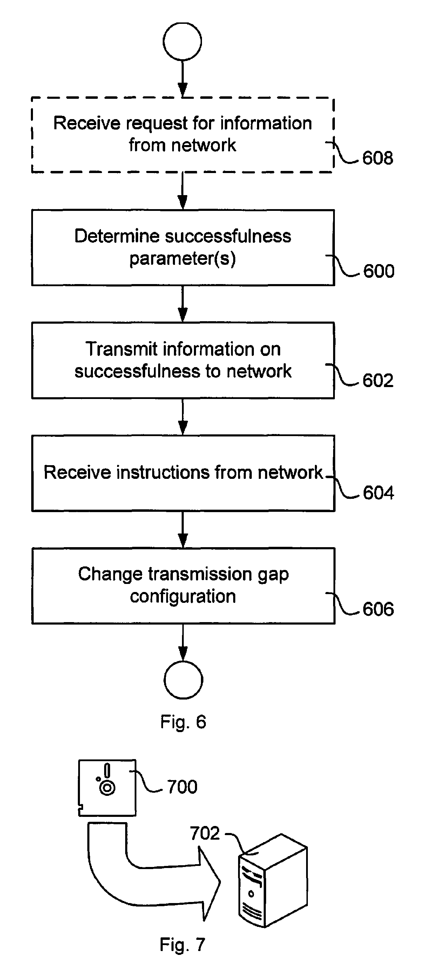

Fig. 6 is a flow chart illustrating a method for a terminal according to an embodiment. In a successfulness determination step 600, the terminal determines one or more parameters on its success of gaining the desired broadcasted information. The parameters can be if one or more of information blocks are read, if the information could be decoded, and also additional information such as signal strength measurements on the neighbouring cell under scrutiny and synchronisation information. The terminal then transmits the determined information on successfulness to the network in a successfulness information transmission step 602. The terminal then receives instructions from the network on any change in transmission gap configuration, such as gap timing or gap pattern, e.g. gap duration and/or gap periodicity. The terminal then changes the transmission gap configuration according to the instructions in a gap configuration changing step 606.

The method according to the present invention is suitable for implementation with aid of processing means, such as computers and/or processors. Therefore, there is provided computer programs, comprising instructions arranged to cause the processing means, processor, or computer to perform the steps of any of the methods according to any of the embodiments described with reference to Figs. 4 to 6, in a terminal and a network controller, respectively. The computer programs preferably comprises program code which is stored on a computer readable medium 700, as illustrated in Fig. 7, which can be loaded and executed by a processing means, processor, or computer 702 to cause it to perform the methods, respectively, according to embodiments of the present invention, preferably as any of the embodiments described with reference to Figs. 4 to 6. The computer 702 and computer program product 700 can be arranged to execute the program code sequentially where actions of the any of the methods are performed stepwise, but mostly be arranged to execute the program code on a real-time basis where actions of any of the methods are performed upon need and availability of data. The processing means, processor, or computer 702 is preferably what normally is referred to as an embedded system. Thus, the depicted computer readable medium 700 and computer 702 in Fig. 7 should be construed to be for illustrative purposes only to provide understanding of the principle, and not to be construed as any direct illustration of the elements.

The transmitting of instructions on the change of transmission gap configuration can be performed also to other terminals than the one reporting on successfulness. This can be for example to terminals in vicinity of the reporting terminal, i.e. terminals experiencing essentially similar signal conditions with relation to the cell structure as the reporting terminal, such that the other terminals are enabled to acquire desired system information. This is based on the principle that the network node can store information on timing properties for its neighbouring cells. The network node can also collect and process reported successfulness information to be able to provide adapted instructions also for terminals not being in close vicinity of the reporting terminal(s) such that any terminal camping on the cell operated by the network node can get proper instructions to enable acquisition of desired system information from any neighbouring cell.

The broadcasted system information optionally comprises any of the Master Block Information or a Global Cell Identifier and that is decoded by the terminal. Further optionally the network request the terminal to inform on the successfulness of acquisition of the broadcasted system information and the terminal transmits this information to the network. These two options are possible to combine with all other embodiments of the UE and the method for the UE as wells as for the method for the network and the network node.

## Claims

1. A method for providing system information from a network of a cellular telecommunication system to a terminal of the telecommunication system, the telecommunication system employing periodical transmission gaps for enabling determination of information by the terminal from broadcasted system information from at least one neighbouring cell, the method comprising
receiving from the terminal information on successfulness of acquisition of the broadcasted system information (400); and
**characterized by** if the information on successfulness indicates unsuccessful acquisition, changing the transmission gap configuration (404), and transmitting instructions to the terminal on the change of transmission gap configuration (406).

2. The method according to claim 1, wherein the information on successfulness comprises timing properties between the transmission gap and the broadcasted system information.

3. The method according to claim 1 or 2, wherein the information on successfulness comprises an indicator whether the broadcasted system information was decoded by the terminal.

4. The method according to any of the preceding claims, wherein changing the transmission gap configuration comprises adjusting timing of the transmission gap.

5. The method according to any of the preceding claims, wherein changing the transmission gap configuration comprises changing transmission gap pattern.

6. The method according to claims 2 and 3, comprising
adjusting timing of the transmission gap, if timing properties between the transmission gap and the broadcasted system information indicates that the transmission gap fails to embrace the timing of the broadcasted system information;
changing transmission gap pattern, if timing properties between the transmission gap and the broadcasted system information indicates that the transmission gap embrace the timing of the broadcasted system information but the indicator whether the broadcasted system information was decoded by the terminal indicates that decoding failed.

7. The method according to claim 5 or 6, wherein changing transmission gap pattern comprises changing duration of the transmission gap.

8. The method according to any of claims 5 to 7, wherein changing transmission gap pattern comprises changing periodicity of transmission gaps.

9. The method according to any of the preceding claims, wherein transmitting instructions to the terminal on the change of transmission gap configuration further comprises transmitting the instructions to another terminal in vicinity of the terminal such that the another terminal is enabled to acquire desired system information.

10. A method for a terminal of a cellular telecommunication system for provision of system information from a network of the telecommunication system, the telecommunication system employing periodical transmission gap for enabling determination of information by the terminal from broadcasted system information from at least one neighbouring cell, the method comprising
transmitting to the network information on successfulness of acquisition of the broadcasted system information (602);
**characterized by**
receiving instructions from the network (604) on a change of transmission gap
configuration if the information on successfulness indicates unsuccessful acquisition; and
changing the transmission gap configuration according to the instructions (606).

11. The method according to claim 10, further comprising determining timing properties between the transmission gap and the broadcasted system information, wherein the information on successfulness comprises the determined timing properties.

12. The method according to claim 10 or 11, further comprising determining whether the broadcasted system information was decoded, wherein the information on successfulness comprises an indicator on whether the broadcasted system information was decoded by the terminal.

13. The method according to any of claims 10 to 12, wherein changing the transmission gap configuration comprises adjusting timing of the transmission gap.

14. The method according to any claims 10 to 13, wherein changing the transmission gap configuration comprises changing transmission gap pattern.

15. The method according to claim 14, wherein changing transmission gap pattern comprises changing duration of the transmission gap.

16. The method according to claim 14 or 15, wherein changing transmission gap pattern comprises changing periodicity of transmission gaps.

17. A network node for a radio network comprising a plurality of cells of a telecommunication system employing periodical transmission gaps for enabling determination by a terminal of the telecommunication system of information from broadcasted system information from at least one neighbouring cell, the network node comprising
a transceiver arranged to receive information on successfulness of acquisition of the broadcasted system information from the terminal (400); and
**characterized by**
a controller being arranged to change the transmission gap configuration if the information on successfulness indicates unsuccessful acquisition (404);
wherein the transceiver is arranged to transmit, instructions to the terminal on the change of transmission gap configuration (406).

18. A terminal of a cellular telecommunication system employing periodical transmission gap for enabling determination of information from broadcasted system information from at least one neighbouring cell, the terminal comprising a transceiver being arranged to transmit, to a network of the telecommunication system, information on successfulness of acquisition of the broadcasted system information (602), and **characterized by** being arranged to receive instructions from the network (604) on a change of transmission gap configuration,
wherein the terminal, in response to the received instructions, which are based on the information if the information on successfulness indicates unsuccessful acquisition, changes the employed transmission gap configuration (606).

## Patentansprüche

1. Verfahren zum Bereitstellen von Systeminformation von einem Netzwerk eines zellularen Telekommunikationssystems für ein Endgerät des Telekommunikationssystems, wobei das Telekommunikationssystem periodische Übertragungslücken anwendet, um die Bestimmung von Information durch das Endgerät aus rundgesendeter Systeminformation aus mindestens einer Nachbarzelle zu ermöglichen, wobei das Verfahren umfasst:
Empfangen von Information über den Erfolg der Erfassung der rundgesendeten Systeminformation vom Endgerät (400);
und **gekennzeichnet ist durch**:
wenn die Information über den Erfolg eine erfolglose Erfassung angibt:
Ändern der Übertragungslückenkonfiguration (404), und
Übertragen von Anweisungen über die Änderung der Übertragungslückenkonfiguration zum Endgerät (406).

2. Verfahren nach Anspruch 1, worin die Information über den Erfolg Eigenschaften der Zeitsteuerung zwischen der Übertragungslücke und der rundgesendeten Systeminformation umfasst.

3. Verfahren nach Anspruch 1 oder 2, worin die Information über den Erfolg einen Indikator umfasst, ob die rundgesendete Systeminformation durch das Endgerät decodiert wurde.

4. Verfahren nach einem der vorhergehenden Ansprüche, worin das Ändern der Übertragungslückenkonfiguration umfasst: Anpassen der Zeitsteuerung der Übertragungslücke.

5. Verfahren nach einem der vorhergehenden Ansprüche, worin das Ändern der Übertragungslückenkonfiguration umfasst: Ändern des Übertragungslückenmusters.

6. Verfahren nach Anspruch 2 oder 3, umfassend:
Anpassen der Zeitsteuerung der Übertragungslücke, wenn die Eigenschaften der Zeitsteuerung zwischen der Übertragungslücke und der rundgesendeten Systeminformation angeben, dass es der Übertragungslücke nicht gelingt, die Zeitsteuerung der rundgesendeten Systeminformation zu umspannen;
Ändern des Übertragungslückenmusters, wenn die Eigenschaften der Zeitsteuerung zwischen der Übertragungslücke und der rundgesendeten Systeminformation angeben, dass die Übertragungslücke die Zeitsteuerung der rundgesendeten Systeminformation umspannt, aber der Indikator, ob die rundgesendete Systeminformation durch das Endgerät decodiert wurde, angibt, dass die Decodierung nicht gelang.

7. Verfahren nach Anspruch 5 oder 6, worin das Ändern des Übertragungslückenmusters umfasst: Ändern der Dauer der Übertragungslücke.

8. Verfahren nach einem der Ansprüche 5 bis 7, worin das Ändern des Übertragungslückenmusters umfasst: Ändern der Periodizität der Übertragungslücken.

9. Verfahren nach einem der vorhergehenden Ansprüche, worin das Übertragen von Anweisungen über die Änderung der Übertragungslückenkonfiguration zum Endgerät ferner umfasst: Übertragen der Anweisungen zu einem anderen Endgerät in der Nähe des Endgeräts, so dass das andere Endgerät befähigt wird, erwünschte Systeminformation zu erfassen.

10. Verfahren für ein Endgerät eines zellularen Telekommunikationssystems zur Bereitstellung von Systeminformation von einem Netzwerk des Telekommunikationssystems, wobei das Telekommunikationssystem periodische Übertragungslücken anwendet, um die Bestimmung von Information durch das Endgerät aus rundgesendeter Systeminformation aus mindestens einer Nachbarzelle zu ermöglichen, wobei das Verfahren umfasst:
Übertragen von Information über den Erfolg der Erfassung der rundgesendeten Systeminformation zum Netzwerk (602);
**gekennzeichnet durch**:
Empfangen von Anweisungen über eine Änderung der Übertragungslückenkonfiguration vom Netzwerk (604), wenn die Information über den Erfolg eine erfolglose Erfassung angibt; und
Ändern der Übertragungslückenkonfiguration gemäß den Anweisungen (606).

11. Verfahren nach Anspruch 10, ferner umfassend: Bestimmen von Eigenschaften der Zeitsteuerung zwischen der Übertragungslücke und der rundgesendeten Systeminformation, worin die Information über den Erfolg die bestimmten Eigenschaften der Zeitsteuerung umfasst.

12. Verfahren nach Anspruch 10 oder 11, ferner umfassend: Bestimmen, ob die rundgesendete Systeminformation decodiert wurde, worin die Information über den Erfolg einen Indikator darüber umfasst, ob die rundgesendete Systeminformation durch das Endgerät decodiert wurde.

13. Verfahren nach einem der Ansprüche 10 bis 12, worin das Ändern der Übertragungslückenkonfiguration umfasst: Anpassen der Zeitsteuerung der Übertragungslücke.

14. Verfahren nach einem der Ansprüche 10 bis 13, worin das Ändern der Übertragungslückenkonfiguration umfasst: Ändern des Übertragungslückenmusters.

15. Verfahren nach Anspruch 14, worin das Ändern des Übertragungslückenmusters umfasst: Ändern der Dauer der Übertragungslücke.

16. Verfahren nach Anspruch 14 oder 15, worin das Ändern des Übertragungslückenmusters umfasst: Ändern der Periodizität der Übertragungslücken.

17. Netzwerkknoten für ein Funknetzwerk, das eine Vielzahl von Zellen eines Telekommunikationssystems umfasst, das periodische Übertragungslücken anwendet, um die Bestimmung von Information durch ein Endgerät des Telekommunikationssystems aus rundgesendeter Systeminformation aus mindestens einer Nachbarzelle zu ermöglichen, wobei der Netzwerkknoten umfasst:
einen Sendeempfänger, der dafür eingerichtet ist, Information über den Erfolg der Erfassung der rundgesendeten Systeminformation vom Endgerät zu empfangen (400); und
**gekennzeichnet ist durch**:
einen Controller, der dafür eingerichtet ist, die Übertragungslückenkonfiguration zu ändern, wenn die Information über den Erfolg eine erfolglose Erfassung angibt (404);
worin der Sendeempfänger dafür eingerichtet ist, Anweisungen über die Änderung der Übertragungslückenkonfiguration zum Endgerät zu übertragen (406).

18. Endgerät eines zellularen Telekommunikationssystems, das periodische Übertragungslücken anwendet, um die Bestimmung von Information aus rundgesendeter Systeminformation aus mindestens einer Nachbarzelle zu ermöglichen, wobei das Endgerät einen Sendeempfänger umfasst, der dafür eingerichtet ist, Information über den Erfolg der Erfassung der rundgesendeten Systeminformation zu einem Netzwerk des Telekommunikationssystems zu übertragen (602), und
**dadurch gekennzeichnet ist, dass** er dafür eingerichtet ist, Anweisungen über eine Änderung der Übertragungslückenkonfiguration vom Netzwerk zu empfangen (604),
worin das Endgerät als Antwort auf die empfangenen Anweisungen, die auf der Information darüber beruhen, dass die Information über den Erfolg eine erfolglose Erfassung angibt, die angewendete Übertragungslückenkonfiguration ändert (606).

## Revendications

1. Procédé de fourniture d'informations de système, d'un réseau d'un système de télécommunication cellulaire à un terminal du système de télécommunication, le système de télécommunication employant des intervalles de transmission périodiques en vue de permettre la détermination d'informations par le terminal à partir d'informations de système diffusées à partir d'au moins une cellule voisine, le procédé comprenant les étapes ci-dessous consistant à :
recevoir, à partir du terminal, des informations sur la réussite de l'acquisition des informations de système diffusées (400) ; et
**caractérisé par** les étapes consistant à :
si les informations sur la réussite indiquent un échec d'acquisition,
modifier la configuration d'intervalles de transmission (404), et
transmettre des instructions au terminal sur la modification de configuration d'intervalles de transmission (406).

2. Procédé selon la revendication 1, dans lequel les informations sur la réussite comportent des propriétés de temporisation entre l'intervalle de transmission et les informations de système diffusées.

3. Procédé selon la revendication 1 ou 2, dans lequel les informations sur la réussite comportent un indicateur indiquant si les informations de système diffusées ont été décodées par le terminal.

4. Procédé selon l'une quelconque des revendications précédentes, dans lequel la modification de la configuration d'intervalles de transmission comporte l'ajustement de la temporisation de l'intervalle de transmission.

5. Procédé selon l'une quelconque des revendications précédentes, dans lequel la modification de la configuration d'intervalles de transmission comporte la modification d'un motif d'intervalles de transmission.

6. Procédé selon les revendications 2 et 3, comprenant les étapes ci-dessous consistant à :
ajuster la temporisation de l'intervalle de transmission, si des propriétés de temporisation entre l'intervalle de transmission et les informations de système diffusées indiquent que l'intervalle de transmission ne parvient pas à englober la temporisation des informations de système diffusées ;
modifier le motif d'intervalles de transmission, si des propriétés de temporisation entre l'intervalle de transmission et les informations de système diffusées indiquent que l'intervalle de transmission englobe la temporisation des informations de système diffusées, alors que l'indicateur indiquant si les informations de système diffusées ont été décodées par le terminal indique que le décodage a échoué.

7. Procédé selon la revendication 5 ou 6, dans lequel la modification du motif d'intervalles de transmission comporte la modification de la durée de l'intervalle de transmission.

8. Procédé selon l'une quelconque des revendications 5 à 7, dans lequel la modification du motif d'intervalles de transmission comporte la modification de la périodicité d'intervalles de transmission.

9. Procédé selon l'une quelconque des revendications précédentes, dans lequel la transmission d'instructions au terminal sur la modification de configuration d'intervalles de transmission comprend en outre la transmission des instructions à un autre terminal à proximité du terminal, de sorte que ledit un autre terminal est apte à acquérir des informations de système souhaitées.

10. Procédé, pour un terminal d'un système de télécommunication cellulaire, de provisionnement d'informations de système à partir d'un réseau du système de télécommunication, le système de télécommunication employant des intervalles de transmission périodiques en vue de permettre la détermination d'informations par le terminal à partir d'informations de système diffusées à partir d'au moins une cellule voisine, le procédé comprenant l'étape ci-dessous consistant à :
transmettre, au réseau, des informations sur la réussite de l'acquisition des informations de système diffusées (602) ;
**caractérisé par** les étapes ci-dessous consistant à :
recevoir des instructions à partir du réseau (604) sur une modification de configuration d'intervalles de transmission, si les informations sur la réussite indiquent un échec d'acquisition ; et
modifier la configuration d'intervalles de transmission selon les instructions (606).

11. Procédé selon la revendication 10, comprenant en outre la détermination de propriétés de temporisation entre l'intervalle de transmission et les informations de système diffusées, dans lequel les informations sur la réussite comportent les propriétés de temporisation déterminées.

12. Procédé selon la revendication 10 ou 11, comprenant en outre l'étape consistant à déterminer si les informations de système diffusées ont été décodées, dans lequel les informations sur la réussite comportent un indicateur indiquant si les informations de système diffusées ont été décodées par le terminal.

13. Procédé selon l'une quelconque des revendications 10 à 12, dans lequel la modification de la configuration d'intervalles de transmission comporte l'ajustement de la temporisation de l'intervalle de transmission.

14. Procédé selon l'une quelconque des revendications 10 à 13, dans lequel la modification de la configuration d'intervalles de transmission comporte la modification du motif d'intervalles de transmission.

15. Procédé selon la revendication 14, dans lequel la modification du motif d'intervalles de transmission comporte la modification de la durée de l'intervalle de transmission.

16. Procédé selon la revendication 14 ou 15, dans lequel la modification du motif d'intervalles de transmission comporte la modification de la périodicité d'intervalles de transmission.

17. Noeud de réseau pour un réseau radio comprenant une pluralité de cellules d'un système de télécommunication employant des intervalles de transmission périodiques en vue de permettre une détermination, par un terminal du système de télécommunication, d'informations, à partir d'informations de système diffusées à partir d'au moins une cellule voisine, le noeud de réseau comportant :
un émetteur-récepteur agencé de manière à recevoir des informations sur la réussite de l'acquisition des informations de système diffusées à partir du terminal (400); et
**caractérisé par**
un contrôleur qui est agencé de manière à modifier la configuration d'intervalles de transmission si les informations sur la réussite indiquent un échec d'acquisition (404) ;
dans lequel l'émetteur-récepteur est agencé de manière à transmettre des instructions, au terminal, sur la modification de configuration d'intervalles de transmission (406).

18. Terminal d'un système de télécommunication cellulaire employant des intervalles de transmission périodiques en vue de permettre la détermination d'informations à partir d'informations de système diffusées à partir d'au moins une cellule voisine, le terminal comprenant un émetteur-récepteur qui est agencé de manière à transmettre, à un réseau du système de télécommunication, des informations sur la réussite de l'acquisition des informations de système diffusées (602) ; et
**caractérisé en ce qu'**il est agencé de manière à recevoir des instructions, en provenance du réseau (604), sur une modification de configuration d'intervalles de transmission ;
dans lequel le terminal, en réponse aux instructions reçues, lesquelles sont basées sur les informations indiquant si les informations sur la réussite indiquent un échec d'acquisition, modifie la configuration d'intervalles de transmission employée (606).
